(19) Europäisches Patentamt / European Patent Office / Office européen des brevets

(11) **EP 2 215 768 B1**

(12) **FASCICULE DE BREVET EUROPEEN**

(45) Date de publication et mention de la délivrance du brevet:
**21.08.2019 Bulletin 2019/34**

(21) Numéro de dépôt: **08871332.6**

(22) Date de dépôt: **03.11.2008**

(51) Int Cl.:
*H04L 9/00* (2006.01)    *G06F 7/58* (2006.01)

(86) Numéro de dépôt international:
**PCT/FR2008/001544**

(87) Numéro de publication internationale:
**WO 2009/092903 (30.07.2009 Gazette 2009/31)**

(54) **PROCEDE ET DISPOSITIFS DE PROTECTION D'UN MICROCIRCUIT CONTRE DES ATTAQUES VISANT A DECOUVRIR UNE DONNEE SECRETE**

VERFAHREN UND VORRICHTUNG ZUM SCHUTZ EINER MIKROSCHALTUNG GEGEN ANGRIFFE ZUR GEWINNUNG GEHEIMER DATEN

METHOD AND DEVICES FOR PROTECTING A MICROCIRCUIT FROM ATTACKS FOR OBTAINING SECRET DATA

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **02.11.2007  FR 0707695**

(43) Date de publication de la demande:
**11.08.2010  Bulletin 2010/32**

(73) Titulaire: **Inside Secure**
**13590 Meyreuil (FR)**

(72) Inventeurs:
• **BENTEO, Bruno**
**31320 Vigoulet Auzil (FR)**
• **FEIX, Benoît**
**13400 AUBAGNE (FR)**
• **NEROT, Sébastien**
**F-13490 Jouques (FR)**

(74) Mandataire: **Marchand, André et al**
**OMNIPAT**
**24 Place des Martyrs de la Résistance**
**13100 Aix-en-Provence (FR)**

(56) Documents cités:
EP-A1- 1 887 458    GB-A- 2 345 229
US-A- 3 963 905    US-A1- 2004 025 032
US-A1- 2006 104 443    US-B1- 6 278 783

**Description**

La présente invention concerne un procédé et des dispositifs de protection d'un microcircuit contre des attaques visant à découvrir une donnée secrète utilisée lors de l'exécution par le microcircuit d'un algorithme de cryptographie.

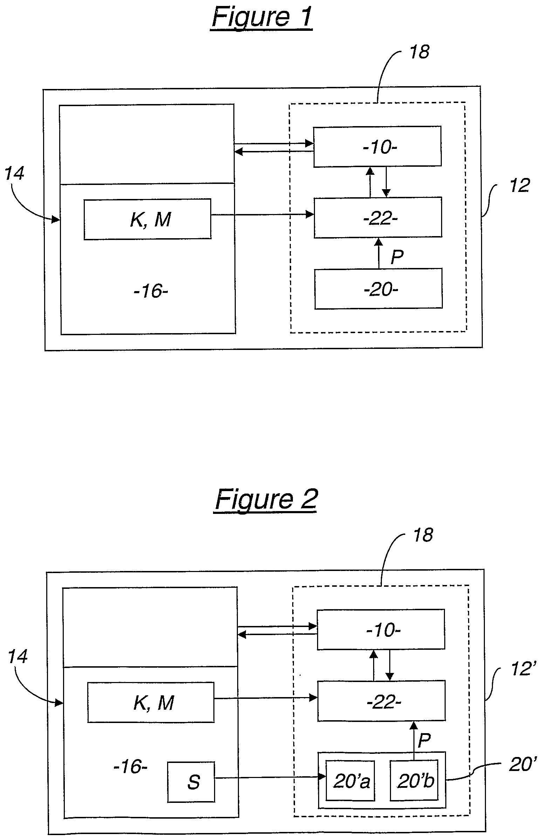

Comme cela est illustré sur la figure 1, une application algorithmique de cryptographie 10 est généralement mise en oeuvre par un microcircuit 12 pour sécuriser l'émission ou la réception d'un message M. Parmi les données secrètes qu'elle est susceptible d'utiliser lors de son exécution, il y a une clé K, dite secrète en cryptographie symétrique et privée en cryptographie asymétrique. Il y a éventuellement aussi le message M lui-même. La clé secrète ou privée K est par exemple stockée dans le microcircuit 12 qui comporte une mémoire 14 incluant elle-même un espace de mémoire sécurisé 16 prévu à cet effet et un microprocesseur 18 pour exécuter l'algorithme de cryptographie 10. Le message M est lui aussi éventuellement destiné à être, au moins temporairement, stocké dans l'espace de mémoire sécurisé 16.

Les dispositifs à microcircuits mettant en oeuvre des algorithmes de cryptographie font parfois l'objet d'attaques visant à déterminer les données secrètes qu'ils manipulent telles que la ou les clés utilisées et éventuellement dans certains cas de l'information sur les messages eux-mêmes.

Parmi les attaques connues, les attaques de type SPA (de l'anglais « Simple Power Analysis ») ou DPA (de l'anglais « Differential Power Analysis ») consistent à mesurer les courants et tensions entrants et sortants dans le microcircuit au cours de l'exécution de l'algorithme de cryptographie dans le but d'en déduire la clé secrète ou privée. La faisabilité de cette famille d'attaques a été démontrée dans l'article de P. Kocher, J. Jaffe et B. Jun intitulé « Differential Power Analysis » notamment publié dans Advances in Cryptology - Crypto 99 Proceedings, Lecture Notes In Computer Science Vol. 1666, M. Wiener, ed., Springer-Verlag, 1999. En particulier, lors de l'exécution de l'algorithme de cryptographie symétrique connu sous le nom de DES (de l'anglais « Data Encryption Standard »), les seize itérations réalisées par cet algorithme sont clairement identifiables à partir des mesures de consommation d'énergie et il est possible d'en extraire statistiquement les bits de la clé secrète utilisée.

On connaît également les attaques par injection de faute(s), dites attaques DFA (de l'anglais « Differential Fault Analysis »), qui consistent à engendrer volontairement des fautes lors de l'exécution de l'algorithme de cryptographie, par exemple en perturbant le microcircuit sur lequel il s'exécute. Une telle perturbation peut inclure un éclairage bref du microcircuit ou la génération d'un ou plusieurs pic(s) de tension sur l'un de ses contacts. Elle permet ainsi sous certaines conditions d'exploiter les erreurs de calcul et de comportement générées afin d'obtenir une partie voire la totalité de la donnée secrète recherchée.

Afin de lutter contre ces attaques qui sont variées par nature, de nombreuses solutions très différentes les unes des autres ont été apportées. L'invention concerne plus particulièrement celles qui mettent en oeuvre un procédé comprenant une étape de génération d'au moins un paramètre de protection P de la donnée secrète et une étape de modification de l'exécution de l'algorithme de cryptographie à l'aide de ce paramètre de protection P.

Ce dernier est en général généré aléatoirement, à l'aide d'un générateur de données pseudo aléatoires classique 20, de sorte que l'exécution de l'algorithme de cryptographie 10 est elle-même rendue aléatoire et décorrélée de la donnée secrète utilisée, par exemple par une technique communément qualifiée de masquage, que nous pouvons également renommer méthode de transformation ou de déformation des données puisque leur manipulation est déformée par opposition à leur utilisation brute, réalisée, par une section de contre-mesure 22 du microprocesseur 18, à l'aide du paramètre de protection P. Ainsi, les données intermédiaires de l'algorithme de cryptographie et, par suite, les courants mesurables sont modifiés par le paramètre de protection aléatoire et leur observation ne permet pas de retrouver la donnée secrète. En revanche, le masquage ne modifie pas l'algorithme lui-même qui fournit donc le même résultat avec ou sans masquage.

Un procédé de ce type est par exemple décrit dans le brevet Américain délivré sous le numéro US 6,278,783. Dans ce document, un mode de réalisation dans le domaine de la cryptographie symétrique et décrit en référence aux figures 1 et 2 de ce même document prévoit la génération d'aléas pour masquer les données secrètes constituées d'une clé K et d'un message M. On procède ainsi de la façon suivante lors d'une étape portant la référence 100 :

- on génère initialement deux aléas K1 et M1, desquels on dérive deux autres aléas K2 et M2 tels que K2 = K XOR K1 et M2 = M XOR M1,
- on associe des permutations aléatoires K1P, K2P, M1P, M2P à ces aléas de sorte que K1P {K1} XOR K2P {K2} soit égal à K et que M1P {M1} XOR M2P {M2} soit égal à M,
- les inverses de ces permutations sont appliquées aux aléas K1, K2, M1 et M2 et l'algorithme de cryptographie (en l'occurrence un algorithme adapté de DES) est appliqué aux quatre aléas permutés plutôt qu'aux deux données secrètes elles-mêmes.

En fin d'algorithme, lors d'une étape qui porte la référence 170, les deux parties du message chiffré obtenues sont combinées pour former le même unique message crypté qui aurait pu être obtenu par application directe de l'algorithme de cryptographie DES aux données K et M.

Un autre procédé de protection des données secrètes dans un microcircuit est divulgué dans le document US 2004/0025032 A1.

autre procédé du même type, plus spécifiquement dédié aux attaques DFA, préconise dans la demande de brevet Français publiée sous le numéro FR 2 867 635 d'exécuter un algorithme de cryptographie une première fois en modifiant son exécution à l'aide d'un premier paramètre généré aléatoirement, puis d'exécuter ce même algorithme de cryptographie une deuxième fois, ou bien d'exécuter son inverse ou une portion de celui-ci, en le modifiant à l'aide d'un deuxième paramètre généré aléatoirement et différent du premier, pour vérifier par comparaison de résultats la bonne exécution de l'algorithme lors de sa première exécution.

A chaque nouvelle exécution d'un algorithme de cryptographie protégé par un procédé du type précité, des aléas différents et par définition imprédictibles sont générés de sorte que deux exécutions successives de cet algorithme ne sont pas comparables (seuls les résultats finaux le sont). Cela peut poser des problèmes en cours de conception lors de la détection d'erreurs d'implémentation (débogage), parce que l'algorithme ne peut pas être exécuté deux fois dans les mêmes conditions. Cela peut aussi poser des problèmes lors de son exécution, notamment pour détecter des attaques par injection de fautes, parce que la solution qui est préconisée dans le document FR 2 867 635 mentionné ci-dessus est assez lourde en termes de capacité de calcul requise.

Une autre solution pourrait consister en une mise en mémoire des variables aléatoires générées pour pouvoir les réutiliser au besoin, mais cela pose d'évidents problèmes de sécurité.

Il pourrait être souhaité de remédier à ces inconvénients en fournissant un procédé de protection d'un microcircuit simple à mettre en oeuvre et proposant une alternative sécurisante aux procédés classiques.

Des modes de réalisation de l'invention concernent un procédé de protection d'un microcircuit contre des attaques visant à découvrir une donnée secrète utilisée lors de l'exécution par le microcircuit d'un algorithme de cryptographie, comprenant une étape de génération d'au moins un paramètre de protection de la donnée secrète et une étape de modification de l'exécution de l'algorithme de cryptographie à l'aide de ce paramètre de protection, et comprenant en outre les étapes consistant à : prévoir au moins un paramètre secret prédéterminé stocké dans une mémoire sécurisée du microcircuit ; définir au moins une fonction génératrice permettant de générer une séquence de valeurs par applications successives de la fonction génératrice au paramètre secret, la séquence de valeurs étant déterminable uniquement à partir de la fonction génératrice et du paramètre secret ; générer au moins une séquence de valeurs au moyen de la fonction génératrice et du paramètre secret; et générer le paramètre de protection de façon reproductible à partir d'au moins une valeur de la séquence de valeurs.

Ainsi le paramètre de protection conserve sa capacité à modifier l'exécution de l'algorithme de cryptographie pour contrecarrer toute attaque, tout en étant reproductible, c'est-à-dire tout pouvant être retrouvé par le concepteur ou fabricant du microcircuit sans qu'il soit nécessaire de le stocker. Seuls la fonction et le ou les paramètre(s) secret(s) associé(s) doivent être définis et conservés par le concepteur ou fabricant.

Selon un mode de réalisation, la donnée secrète est un message, une clé secrète de cryptographie symétrique, une clé privée de cryptographie asymétrique ou une combinaison de ces éléments.

Selon un mode de réalisation, le procédé comprend une étape d'initialisation comprenant l'étape consistant à définir le paramètre secret, et chaque exécution de l'algorithme de cryptographie est modifiée par une pluralité de paramètres de protection qui sont respectivement générés à partir des éléments $p_{N(i-1)+1}$ à $p_{Ni}$ de la séquence de valeurs lors d'une i-ème exécution de l'algorithme de cryptographie suivant l'étape d'initialisation.

Selon un mode de réalisation, la séquence de valeurs est générée au moyen de la relation de récurrence $p_{n+1} = q.p_n + r$, appliquée à des paramètres secrets $q$, $r$ et $p_0$.

Selon un mode de réalisation, la séquence de valeurs est générée au moyen de la relation de récurrence $p_{n+1} = \text{mod } m$, appliquée à des paramètres secrets $q$, $r$, $m$ et $p_0$.

Selon un mode de réalisation, $m$ est une puissance entière de 2.

Selon un mode de réalisation, la séquence de valeurs est à valeurs dans un groupe cyclique GC à $m$ éléments avec une valeur $p$ comme élément générateur du groupe et la multiplication comme loi de composition interne, et l'étape de génération de la séquence de valeurs comprend les étapes consistant à : choisir un élément initial $p_0$ de la séquence comme étant l'élément générateur $p$ auquel est appliquée $k$ fois la loi de composition interne du groupe GC, et passer d'un élément $p_i$ de rang $i$ à un élément $p_{i+1}$ de rang $i+1$ en appliquant $k'$ fois la loi de composition interne du groupe GC, $m$, $p$, $k$ et $k'$ étant des paramètres secrets.

Selon un mode de réalisation, la séquence de valeurs est à valeurs dans un groupe de Frobenius, notamment le groupe des transformations affines inversibles sur un corps fini GF(q), où l'ordre $q$ est un nombre premier de $k$ bits, $q$ et $k$ étant des paramètres secrets.

Selon un mode de réalisation, la séquence de valeurs est à valeurs issues d'un registre à décalage avec rétroaction linéaire de taille $m$ tel que les éléments de la séquence vérifient une relation du type $p_{t+m} = \alpha_m.p_t + \alpha_{m-1}.p_{t+1} + ... + \alpha_1.p_{t+m-1}$, où les $\alpha_i$ prennent la valeur 0 ou 1, les paramètres $\alpha_i$, la taille $m$ et les $m$ premiers éléments de la séquence de valeurs étant des paramètres secrets.

Selon un mode de réalisation, la séquence de valeurs est obtenue par la relation de récurrence $p_{n+1} = F(p_n)$, où F réalise un calcul de Contrôle de Redondance Cyclique sur la base d'un polynôme de Contrôle de Redondance Cyclique, le premier élément de la séquence de valeurs et le polynôme choisi étant des paramètres secrets.

Selon un mode de réalisation, le procédé comporte les étapes consistant à : générer une pluralité de séquences de valeurs à partir d'une pluralité de fonctions génératrices et d'une pluralité de paramètres secrets correspondants ; combiner la pluralité de séquences de valeurs,) à l'aide d'une relation prédéfinie pour générer une nouvelle séquence de valeurs ; et générer le paramètre de protection de façon reproductible à partir d'au moins une valeur de la nouvelle séquence de valeur.

Selon un mode de réalisation, le procédé comporte les étapes consistant à : combiner la séquence de valeurs avec des paramètres publics de l'algorithme de cryptographie pour générer une nouvelle séquence de valeurs, et générer le paramètre de protection de façon reproductible à partir d'au moins une valeur de la nouvelle séquence de valeurs.

Des modes de réalisation de l'invention concernent également un dispositif à microcircuit protégé contre des attaques visant à découvrir une donnée secrète utilisée lors de l'exécution par le microcircuit d'un algorithme de cryptographie, comprenant au moins une mémoire sécurisée pour le stockage de la donnée secrète, un générateur de données pour la génération d'au moins un paramètre de protection de la donnée secrète et un microprocesseur pour l'exécution, modifiée à l'aide du paramètre de protection, de l'algorithme de cryptographie, dans lequel le générateur de données comporte : une section génératrice configurée pour générer la séquence de valeurs par application successives d'au moins une fonction génératrice prédéfinie à au moins un paramètre secret prédéterminé, la séquence de valeurs étant déterminable uniquement à partir du paramètre secret et de la fonction génératrice, ainsi qu'une section de fourniture du paramètre de protection de façon reproductible à partir d'au moins une valeur d'une séquence de valeurs fournie par la section génératrice, et dans lequel le paramètre secret est un paramètre prédéterminé stocké dans la mémoire sécurisée du microcircuit.

Selon un mode de réalisation, la donnée secrète est un message, une clé secrète de cryptographie symétrique, une clé privée de cryptographie asymétrique ou une combinaison de ces éléments.

Selon un mode de réalisation, le dispositif est configuré pour : réaliser une étape d'initialisation comprenant une étape consistant à définir le paramètre secret, et modifier chaque exécution de l'algorithme de cryptographie au moyen d'une pluralité de paramètres de protection qui sont respectivement générés à partir des éléments $p_{N(i-1)+1}$ à $p_{Ni}$ de la séquence de valeurs lors d'une i-ème exécution de l'algorithme de cryptographie suivant l'étape d'initialisation.

Selon un mode de réalisation, la section génératrice est configurée pour fournir une séquence de valeurs obtenue par la relation de récurrence $p_{n+1} = q.p_n + r$, appliquée à des paramètres secrets q, r et $p_0$.

Selon un mode de réalisation, la section génératrice est configurée pour fournir une séquence de valeurs obtenue par la relation de récurrence $p_{n+1} = \bmod m$, appliquée à des paramètres secrets q, r, m et $p_0$.

Selon un mode de réalisation, m est une puissance entière de 2.

Selon un mode de réalisation, la section génératrice est configurée pour fournir une séquence de valeurs à valeurs dans un groupe cyclique GC à m éléments avec une valeur p comme élément générateur du groupe et la multiplication comme loi de composition interne, et pour réaliser les étapes consistant à : choisir un élément initial $p_0$ de la séquence comme étant l'élément générateur p auquel est appliquée k fois la loi de composition interne du groupe GC ; passer d'un élément $p_i$ de rang i à un élément $p_{i+1}$ de rang i+1 en appliquant k' fois la loi de composition interne du groupe GC, m, p, k et k' étant des paramètres secrets.

Selon un mode de réalisation, la section génératrice est configurée pour fournir une séquence de valeurs à valeurs dans un groupe de Frobenius, notamment le groupe des transformations affines inversibles sur un corps fini GF(q), où l'ordre q est un nombre premier de k bits, q et k étant des paramètres secrets.

Selon un mode de réalisation, la section génératrice est configurée pour fournir une séquence de valeurs à valeurs issues d'un registre à décalage avec rétroaction linéaire de taille m tel que les éléments de la séquence vérifient une relation du type $p_{t+m} = \alpha_m.p_t + \alpha_{m-1}.p_{t+1} + ... + \alpha_1.p_{t+m-1}$, où les $\alpha_i$ prennent la valeur 0 ou 1, les paramètres $\alpha_i$, la taille m et les m premiers éléments de la séquence de valeurs étant des paramètres secrets.

Selon un mode de réalisation, la section génératrice est configurée pour fournir une séquence de valeurs obtenue par la relation de récurrence $p_{n+1} = F(p_n)$, où F réalise un calcul de Contrôle de Redondance Cyclique sur la base d'un polynôme de Contrôle de Redondance Cyclique, le premier élément de la séquence de valeurs et le polynôme choisi étant des paramètres secrets.

Selon un mode de réalisation, le générateur de données est configuré pour : générer une pluralité de séquences de valeurs à partir d'une pluralité de fonctions génératrices et d'une pluralité de paramètres secrets correspondants ; combiner la pluralité de séquences de valeurs,) à l'aide d'une relation prédéfinie pour générer une nouvelle séquence de valeurs ; générer le paramètre de protection de façon reproductible à partir d'au moins une valeur de la nouvelle séquence de valeurs.

Selon un mode de réalisation, le générateur de données est configuré pour : combiner la séquence de valeurs avec des paramètres publics de l'algorithme de cryptographie pour générer une nouvelle séquence de valeurs, et générer le paramètre de protection de façon reproductible à partir d'au moins une valeur de la nouvelle séquence de valeurs.

Des modes de réalisation de l'invention concernent également un dispositif portable, notamment carte à puce, comprenant un dispositif à microcircuit du type décrit ci-dessus.

Ces objets, caractéristiques et avantages ainsi que d'autres de la présente invention seront exposés plus en détail dans la description suivante, faite à titre non limitatif en relation avec les figures jointes parmi lesquelles :

- la figure 1 précédemment décrite représente de façon schématique la structure d'un dispositif à microcircuit protégé contre des attaques, de type classique,
- la figure 2 représente de façon schématique la structure d'un dispositif à microcircuit protégé contre des attaques, selon un mode de réalisation de l'invention,
- la figure 3 représente de façon schématique une carte à puce comprenant le dispositif à microcircuit de la figure 2, et
- la figure 4 illustre les étapes successives d'un mode de réalisation d'un procédé de protection d'un microcircuit selon l'invention.

Le dispositif à microcircuit 12' représenté sur la figure 2 comporte, comme celui représenté sur la figure 1, une application algorithmique de cryptographie 10, une mémoire 14 incluant un espace de mémoire sécurisé 16, un microprocesseur 18 et une section de contre-mesure 22. L'espace mémoire sécurisé 16 n'est pas accessible de l'extérieur du microcircuit sans autorisation et/ou authentification.

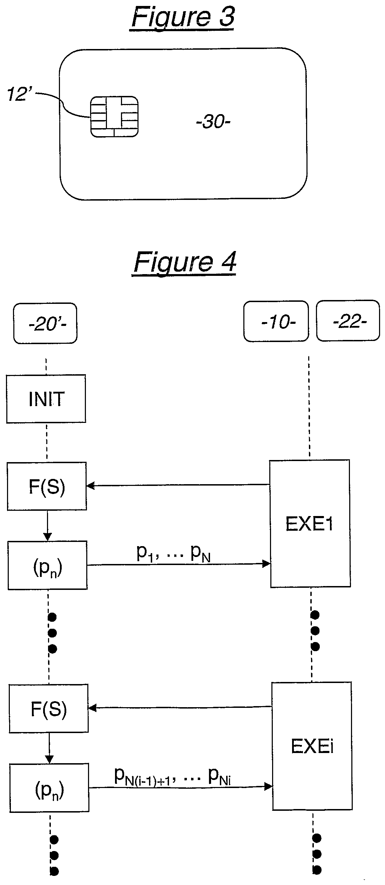

Le microcircuit 12' est par exemple intégré sous forme de puce d'une carte à puce sécurisée 30 comme représenté sur la figure 3. On notera cependant que, bien que l'application algorithmique de cryptographie 10 et la section de contre-mesure 22 aient été représentées comme distinctes, celles-ci peuvent être en fait intimement imbriquées en une même implémentation d'un algorithme de cryptographie incluant une contre-mesure.

Contrairement au dispositif 12, dans ce dispositif 12' le générateur de données pseudo aléatoires 20 de type classique est remplacé par un générateur de données 20' qui comporte :

- une section 20'a d'application d'une fonction F prédéfinie à au moins un paramètre secret prédéterminé S pour la génération d'une séquence de valeurs déterminable uniquement à partir de ce paramètre secret et de cette fonction F, et
- une section 20'b de fourniture d'au moins un paramètre de protection P de façon reproductible à partir d'une valeur de cette séquence.

La section 20'a est en fait une implémentation logicielle ou matérielle de la fonction F.

Le paramètre secret S est stocké dans la mémoire sécurisée 16 et fourni en entrée de la section 20'a du générateur 20', tandis que le paramètre de protection P est fourni, en sortie de la section 20'b, à la section de contre-mesure 22.

Le paramètre P n'est donc pas un aléa au sens classique mentionné dans les documents de l'état de la technique. Il s'agit d'un résultat déterministe issu du calcul de la fonction F exécuté par le générateur 20' sur au moins un paramètre secret S qui peut être propre à la carte à puce 30 sur laquelle est disposé le microcircuit 12'. Ce paramètre secret est par exemple dérivé du numéro de série de la carte 30.

L'application répétée de la fonction F à S génère une séquence $(p_n)$ dont les éléments sont à l'origine du(des) paramètre(s) de protection fourni(s) par le générateur. D'une façon générale, le générateur peut fournir autant de paramètres P issus de valeurs de la séquence $(p_n)$ que nécessaire en fonction de l'application de contre-mesure implémentée dans la carte 30. Cette séquence $(p_n)$ ne peut être reproduite qu'avec la connaissance de la fonction génératrice F et des éléments déterministes initiaux qu'elle utilise (le paramètre S).

Chaque paramètre de protection P peut être directement issu d'un élément $p_n$ de la séquence $(p_n)$ : en d'autres termes, $P = p_n$. De façon alternative, l'élément $p_n$ peut subir un traitement avant de fournir le paramètre P. Par exemple P peut être le résultat d'un calcul $P = p_n \text{ XOR } k_n$, où $k_n$ est une constante secrète de masquage.

Bien entendu, si la séquence $(p_n)$ est cyclique et/ou opère dans un ensemble fini d'éléments, l'espace des valeurs $p_n$ générées pourra être suffisamment grand pour résister aux attaques. En effet plus l'espace considéré est grand, meilleure est la robustesse de la contre-mesure.

Nous allons dans un premier temps présenter plusieurs exemples non limitatifs de séquences de valeurs $(p_n)$ pouvant être fournies par un générateur selon l'invention. Dans un deuxième temps, nous exposerons plusieurs utilisations possibles de telles séquences de valeurs pour la fourniture de paramètres de protection à des applications diverses de contre-mesure.

**Exemples de fonctions génératrices de séquences de valeurs pour la fourniture de paramètres de protection**

1) Fonctions à base de suites arithmético-géométriques

Si l'on définit la séquence de valeurs $(p_n)$ à l'aide de la fonction F entière à valeurs entières par la relation suivante :

$$p_{n+1} = F(p_n) = q.p_n + r,$$

où q et r sont des paramètres secrets constituant, avec l'élément initial $p_0$ de la séquence, les paramètres secrets S précédemment cités, on est capable de fournir des paramètres de protection issus d'une suite arithmético-géométrique. Les paramètres de protection sont par exemple les éléments de la séquence $(p_n)$.

Si r = 0, il s'agit d'une séquence géométrique dont on peut retrouver un terme $p_i$, utilisé à une étape précise de la cryptographie, à l'aide des paramètres secrets q et $p_0$ de la façon suivante : $p_i = q^i.p_0$.

Si q = 1, il s'agit d'un séquence arithmétique dont on peut retrouver un terme $p_i$ à l'aide des paramètres secrets r et $p_0$ de la façon suivante : $p_i = r.i + p_0$.

Si r est non nul et q différent de 1, il s'agit d'une séquence arithmético-géométrique dont on peut retrouver un terme $p_i$ à l'aide des paramètres secrets q, r et $p_0$ de la façon suivante :

$$p_i = q^i.p_0 + r.(q^i-1)/(q-1).$$

On peut aussi réduire l'espace des éléments de la séquence $(p_n)$ par un nombre entier m à l'aide de la relation suivante :

$$p_{n+1} = F(p_n) \text{ modulo } m = (q.p_n + r) \text{ modulo } m.$$

On remarque que si m est un nombre premier, cette séquence prend la forme du groupe des transformations affines inversibles sur le corps fini GF(m) = {0, 1, ..., m-1}.

On peut aussi choisir m comme une puissance de 2, pour générer des séquences d'éléments à nombre de bits constant. Par exemple, si l'on veut générer des séquences de paramètres $p_i$ à k bits, on choisit $m = 2^k$.

De façon optionnelle, m fait partie des paramètres secrets à conserver en mémoire sécurisée.

2) Fonctions définissant un groupe multiplicatif cyclique

Soit un groupe cyclique GC à m éléments avec une valeur p comme élément générateur et la multiplication comme loi de composition interne : GC = {p, $p^2$, ..., $p^m$}. On peut définir la séquence de valeurs $(p_n)$ de la façon suivante :

- l'élément initial $p_0$ est choisi comme étant l'élément générateur p auquel on applique k fois la loi de composition interne du groupe GC,
- on passe de l'élément $p_i$ à l'élément $p_{i+1}$ en appliquant k' fois la loi de composition interne du groupe GC.

Les paramètres secrets S utilisés par la fonction génératrice de la séquence $(p_n)$ sont alors par exemple l'élément générateur p et les valeurs k, k' et m. De plus, comme précédemment, Les paramètres de protection P générés sont par exemple les éléments de la séquence $(p_n)$.

3) Fonctions définissant un groupe de Frobenius

Soit un corps fini GF(q), où l'ordre q est un nombre premier de k bits. Le groupe des transformations affines inversibles sur ce corps fini est un groupe de Frobenius. Une propriété intéressante des groupes de Frobenius est qu'aucun élément non trivial ne fixe plus d'un point.

Dans ce contexte, les transformations affines utilisables prennent la forme de fonctions y = f(x) = a.x + b, où a ≠ 0 et où les opérations se font dans le corps GF(q). Il est donc possible de définir une fonction génératrice de la séquence $(p_n)$ s'appliquant à des paramètres secrets q, a, b et $p_0$ prédéterminés. En choisissant par exemple $q = 2^{16} + 1$ et, en notation hexadécimale, a = 0x4cd3, b = 0x76bb, $p_0$ = 0xef34, on obtient une séquence commençant par les termes $p_1$

= 0xc6cf, $p_2$ = 0x8baf, $p_3$ = 0x620d, $p_4$ = 0x0605, $p_5$ = 0xe70c, $p_6$ = 0x3049, $p_7$ = 0xe069, $p_8$ = 0x55ee, etc.

4) Fonctions issues d'un registre à décalage avec rétroaction linéaire (registre de type LFSR)

Il s'agit pour ce type de fonctions de choisir un paramètre secret $p_0$, par exemple de 16 bits, et un registre à décalage LFSR, par exemple avec une sortie correspondante de 16 bits. Si la taille du registre LFSR est m, alors un terme $p_{t+m}$ de la séquence ($p_n$) est déterminé par les m termes qui le précèdent à l'aide d'une équation linéaire du type : $p_{t+m} = \alpha_m \cdot p_t + \alpha_{m-1} \cdot p_{t+1} + ... + \alpha_1 \cdot p_{t+m-1}$, où les $\alpha_i$ prennent la valeur 0 ou 1.

5) Fonctions définissant un calcul de Contrôle de Redondance Cyclique (CRC)

Il s'agit pour ce type de fonctions de choisir un paramètre secret $p_0$, par exemple de 16 bits, et un polynôme CRC correspondant parmi ceux utilisés de façon classique dans les calculs de CRC, par exemple le polynôme CRC-16 ($X^{16} + X^{15} + X^2 + 1$) ou le polynôme CRC CCITT V41 ($X^{16} + X^{12} + X^5 + 1$). Un terme $p_{n+1}$ de la séquence ($p_n$) est déterminé en fonction du terme précédent $p_n$ par la relation $p_{n+1} = F(p_n)$, où F réalise un calcul de CRC sur la base du polynôme choisi.

6) Combinaisons de séquences de valeurs

Il est en effet aussi possible de calculer plusieurs séquences de valeurs, chacune par exemple selon l'une des méthodes exposées ci-dessus, et de les combiner à l'aide d'une fonction prédéfinie pour générer une nouvelle séquence de valeurs à utiliser comme paramètres de protection. On génère ainsi la séquence ($p_n$), d'après deux autres séquences ($p'_n$) et ($p''_n$), en calculant pour chaque indice n, $p_n = T(p'_n, p''_n)$.
La fonction T en question peut être une matrice secrète de valeurs, les valeurs $p'_n$ et $p''_n$ désignant alors respectivement une ligne et une colonne de cette matrice.

7) Combinaisons impliquant une séquence de valeurs et des données publiques

La séquence ($p_n$) peut être générée à partir d'une première séquence ($p'_n$), en fonction également de données publiques, telles que par exemple des données utilisées pendant l'exécution de l'application de cryptographie avec contre-mesure et non secrètes. Parmi ces données, selon les applications, on peut citer le message M (en clair ou crypté), une clé publique Kpub (pour une application de cryptographie asymétrique), etc. Les valeurs de la séquence utilisées comme paramètres de protection sont alors calculées à l'aide d'une fonction COMB quelconque combinant toutes ces données :

$$p_n = \text{COMB}(p'_n, M, Kpub, ...).$$

Un intérêt de cette combinaison est que la séquence de valeurs ($p_n$) peut servir, non seulement à alimenter en paramètres de protection l'application de contre-mesure de l'algorithme de cryptographie, mais aussi à détecter des attaques par injection de fautes (notamment sur les données publiques). En effet par régénération de la séquence ($p'_n$) à l'aide du ou des paramètre(s) secret(s), en fin d'exécution de l'algorithme de cryptographie par exemple, puis par utilisation de cette séquence ($p'_n$) régénérée et des données publiques telles qu'elles apparaissent en fin d'exécution, on peut vérifier si l'application de la fonction. COMB produit la même séquence de valeurs ($p_n$) ou non et donc si des données publiques ont été affectées ou pas en cours d'exécution.

**Exemples d'utilisation d'une séquence de valeurs générée selon l'une des méthodes précédentes par un algorithme de cryptographie avec contre-mesure**

1) Premier exemple

Comme indiqué en préambule, des aléas sont générés par l'algorithme décrit dans le document US 6,278,783, au cours de l'étape 100 décrite en référence à la figure 1 de ce document, pour masquer les données secrètes K (la clé secrète) et M (le message à crypter). La génération aléatoire et non prédictible des paramètres K1, M1, K1P et M1P en tant que paramètres de protection, desquels sont ensuite dérivés les paramètres K2, M2, K2P et M2P, est une étape essentielle du procédé décrit qui permet de contrer des attaques par analyse de consommation d'énergie.
Il serait pourtant avantageux de remplacer cette étape 100, par une étape de génération de paramètres de protection non aléatoires à l'aide d'un générateur 20' selon un mode de réalisation de l'invention et non pas à l'aide d'un générateur 20 de données pseudo aléatoires classique tel que préconisé dans le document US 6,278,783.

Puisque K1, M1, K1P et M1P ne sont pas nécessairement représentés sur un même nombre de bits (par exemple, dans l'application DES envisagée dans le document US 6,278,783, K1 est représenté sur 56 bits alors que M1 est représenté sur 64 bits), chacun de ces paramètres peut être issu d'une séquence qui lui est propre. On définit et on mémorise ainsi respectivement quatre familles de paramètres secrets et quatre fonctions correspondantes, génératrices de quatre séquences de valeurs $(K1_n)$, $(M1_n)$, $(K1P_n)$ et $(M1P_n)$ à partir desquelles sont générés les quatre paramètres de protection $K1_i$, $M1_i$, $K1P_i$ et $M1P_i$ d'une i-ème exécution de l'application DES. Dans ce cas, un compteur peut mémoriser l'indice i, indicateur du nombre de fois qu'un dispositif implémentant ce perfectionnement de l'algorithme DES l'a effectivement exécuté depuis sa fabrication, ou depuis sa dernière initialisation. Comme déjà indiqué, les paramètres de protection $K1_i$, $M1_i$, $K1P_i$ et $M1P_i$ peuvent être générés non seulement à partir des séquences $(K1_n)$, $(M1_n)$, $(K1P_n)$ et $(M1P_n)$ mais aussi en fonction de données publiques supplémentaires utilisées en cours d'exécution.

En fin de cryptographie, c'est-à-dire à l'étape 170 représentée à la figure 1 du document US 6,278,783, on peut alors générer une seconde fois chacun des paramètres de protection utilisé, pour démasquer l'exécution de l'application DES entre les étapes 110 et 160, de manière à détecter des attaques par injection de fautes. En effet cette étape de régénération conduira à des permutations inverses erronées si une faute a eu lieu et les résultats obtenus ne seront plus exploitables par des techniques d'analyse de fautes classiques.

Au cours de la vérification d'une implémentation de l'application DES précitée, on peut aussi reproduire une i-ème exécution de cette application, de manière à réaliser un débogage efficace, grâce à la possibilité de retrouver simplement les paramètres $K1_i$, $M1_i$, $K1P_i$ et $M1P_i$ dans la séquence de nombres déterministes.

2) Deuxième exemple

Comme indiqué en préambule également, des aléas A1 et A2 sont générés par l'algorithme de traitement sécurisé décrit dans le document FR 2 867 635, par exemple au cours d'étapes E204 et E208 décrites en référence à la figure 2 de ce document. Ces aléas sont générés aléatoirement indépendamment l'un de l'autre de sorte qu'ils ont toutes les chances d'être différents dans le cas le plus général. Ils sont par exemple utilisés indépendamment lors de deux exécutions consécutives d'un même algorithme de cryptographie, ou de deux algorithmes de cryptographie liés par leurs résultats.

Ici encore, A1 et A2 pourraient avantageusement être générés de façon non aléatoire par un générateur 20' selon l'invention. Dans un mode de réalisation de l'invention, A1 et A2 sont issus d'une même séquence $(p_n)$ obtenue par exemple, mais non nécessairement, selon l'une des méthodes précitées. Ainsi, lors de la i-ème exécution du procédé de traitement sécurisé envisagé dans le document FR 2 867 635, au lieu de générer A1 et A2 de façon aléatoire et indépendante, A1 et A2 peuvent être obtenus de la façon suivante :

$$A1 = p_{2i-1},$$

$$A2 = p_{2i}.$$

Il est alors aisé de retrouver les valeurs de A1 et A2 utilisées lors de la i-ème exécution du pro.cédé de traitement sans avoir besoin de les conserver en mémoire, soit en cours de traitement pour vérifier l'intégrité des données manipulées, soit ultérieurement pour déboguer, si besoin, le procédé de traitement.

De même il est ainsi permis de créer une relation de dépendance entre les nombres A1 et A2 qui peut être utile dans les contre-mesures visant à se prémunir de et détecter les attaques par injection de faute(s).

3) Autres exemples

Il existe de nombreux dispositifs et procédés connus de contre-mesure et bien d'autres encore à imaginer et réaliser. D'une façon générale, chaque fois qu'une contre-mesure algorithmique est utilisée pour modifier l'exécution d'un algorithme de cryptographie symétrique ou asymétrique, la génération d'aléas introduits par la contre-mesure est préconisée. Selon l'invention, elle est avantageusement remplacée par la génération non aléatoire de paramètres de protection issus d'une ou plusieurs séquence(s) de valeurs obtenue(s) à l'aide d'au moins un paramètre secret, comme cela a été illustré par les deux exemples précédents.

La figure 4 illustre un exemple d'étapes réalisées par un procédé selon un mode de réalisation de l'invention, appliqué à l'exécution d'un algorithme quelconque de cryptographie avec contre-mesure, utilisant N paramètres de

protection $P_1$, ... $P_N$ par exécution, tous les paramètres de protection pouvant être extraits d'une même séquence de valeurs ($p_n$) générée par la section 20'a.

Lors d'une première étape INIT réalisée par le générateur 20', un compteur i est initialisé à 0. Ce compteur i est destiné à conserver en mémoire le nombre de fois que l'algorithme de cryptographie a été exécuté depuis cette étape d'initialisation INIT, tant qu'une autre initialisation n'est pas réalisée.

Au cours de cette étape, le paramètre secret S (ou les paramètres S lorsqu'il y en a plusieurs), à partir duquel la séquence de valeurs doit être générée, est défini. Il peut être conservé d'une précédente initialisation, mais peut aussi être généré sur la base d'une nouvelle valeur à l'occasion de cette initialisation. Il est par exemple généré à partir de données uniques d'identification, telles que le numéro de série de la carte à puce porteuse du microcircuit 12'. Il peut aussi être généré à partir de paramètres ou phénomènes physiques liés au microcircuit à un instant donné, qui peuvent être aléatoires. Dans tous les cas, il est conservé en mémoire de façon sécurisée, pour permettre au microcircuit de régénérer à tout moment une même séquence de valeurs ($p_n$) à l'aide de la fonction implémentée par la section 20'a.

L'étape d'initialisation INIT peut être unique dans le cycle de vie du microcircuit, réalisée lors de la conception par le constructeur, ou reproduites plusieurs fois, par exemple régulièrement ou chaque fois que le compteur i atteint une valeur imax.

Lors d'une première exécution EXE1 de l'algorithme de cryptographie avec contre-mesure, le générateur 20', plus particulièrement la section 20'a, est sollicité une ou plusieurs fois pour appliquer le paramètre secret S à la fonction F prédéfinie, de manière à générer, en une ou plusieurs fois, un nombre N d'éléments de la séquence de valeurs ($p_n$) : $p_1$, ... $p_N$. A partir de ces N premiers éléments, les N paramètres de protection $P_1$, ... $P_N$ sont générés.

Par exemple, pour tout k tel que $1 \leq k \leq N$, $P_k = p_k$.

En variante, si l'on dispose de N valeurs secrètes supplémentaires $Sec_1$, ... $Sec_N$ parmi les paramètres secrets S conservés en mémoire sécurisée, on peut effectuer le calcul supplémentaire suivant :
pour tout k tel que $1 \leq k \leq N$, $P_k = Sec_k$ XOR $p_k$, ou $P_k = Sec_k$ ADD $p_k$, ou bien également $P_k = Sec_k$ SUB $p_k$, de manière à transformer (ou déformer ou masquer) les paramètres utilisés.

Par la suite, lors d'une i-ème exécution EXEi de l'algorithme de cryptographie avec contre-mesure, le générateur 20', plus particulièrement la section 20'a, est de nouveau sollicité une ou plusieurs fois pour appliquer le paramètre secret S à la fonction F prédéfinie, de manière à générer, en une ou plusieurs fois, un nombre N d'éléments supplémentaires de la séquence de valeurs ($p_n$) : $p_{N(i-1)+1}$, ... $p_{Ni}$. A partir de ces N éléments supplémentaires, les N paramètres de protection $P_1$, ... $P_N$ sont générés, comme précédemment.

Par exemple, pour tout k tel que $1 \leq k \leq N$, $P_k = p_{N(i-1)+k}$.

En variante, si l'on dispose des N valeurs secrètes supplémentaires $Sec_1$, ... $Sec_N$, on peut effectuer le calcul supplémentaire suivant :
pour tout k tel que $1 \leq k \leq N$, $P_k = Sec_k$ XOR $p_{N(i-1)+k}$, ou $P_k = Sec_k$ ADD $p_{N(i-1)+k}$, ou bien également $P_k = Sec_k$ SUB $p_{N(i-1)+k}$, de manière à transformer (ou déformer ou masquer) les paramètres utilisés.

Quelle que soit la méthode utilisée pour générer la ou les séquence(s) de valeurs à l'origine des paramètres de protection, la connaissance de la méthode et des valeurs secrètes utilisées par la méthode, y compris le paramètre initial $p_0$ chargé préalablement en mémoire ROM ou lors d'une étape du cycle de vie du dispositif à microcircuit en mémoire EEPROM, permet de retrouver à tout moment les paramètres de protection générés et utilisés dans la vie du dispositif. Il apparaît clairement que cette particularité permet alors des débogages simples et efficaces ainsi qu'une résistance améliorée aux attaques par injection de fautes.

Le choix de la méthode utilisée pour générer la séquence de valeurs et le ou les paramètre(s) de protection est dicté par l'application envisagée.

Par ailleurs, le nombre de paramètres secrets peut permettre de définir le niveau d'indépendance entre l'entité qui est responsable du développement du dispositif à microcircuit et son émetteur.

**Revendications**

1. Procédé de protection d'un microcircuit (12) contre des attaques visant à découvrir une donnée secrète (K, M) stockée dans une mémoire sécurisée (16) et utilisée lors de l'exécution par le microcircuit d'un algorithme de cryptographie (10), comprenant une étape de génération d'au moins un paramètre (P) de protection de la donnée secrète (K, M) et une étape de modification de l'exécution de l'algorithme de cryptographie à l'aide de ce paramètre de protection (P), **caractérisé en ce qu'**il comporte les étapes consistant à :

   - prévoir au moins un paramètre secret (S) prédéterminé stocké dans la mémoire sécurisée (16) du microcircuit,
   - définir au moins une fonction génératrice (20'a) permettant de générer une séquence de valeurs (($p_n$)) par applications successives de la fonction génératrice au paramètre secret (S), la séquence de valeurs étant déterminable uniquement à partir de la fonction génératrice et du paramètre secret (S),

- générer au moins une séquence de valeurs $((p_n))$ au moyen de la fonction génératrice et du paramètre secret, et
- générer le paramètre de protection (P) de façon reproductible à partir d'au moins une valeur de la séquence de valeurs.

**2.** Procédé de protection d'un microcircuit (12) selon la revendication 1, dans lequel la donnée secrète (K, M) est un message (M), une clé secrète (K) de cryptographie symétrique, une clé privée (K) de cryptographie asymétrique ou une combinaison de ces éléments.

**3.** Procédé de protection d'un microcircuit (12) selon la revendication 1 ou 2, comprenant une étape d'initialisation (INIT) comprenant l'étape consistant à définir le paramètre secret (S), et dans lequel chaque exécution de l'algorithme de cryptographie est modifiée par une pluralité de paramètres de protection $(P_1, ... P_N)$ qui sont respectivement générés à partir des éléments $p_{N(i-1)+1}$ à $p_{Ni}$ de la séquence de valeurs $((p_n))$ lors d'une i-ème exécution de l'algorithme de cryptographie suivant l'étape d'initialisation.

**4.** Procédé de protection d'un microcircuit (12) selon l'une des revendications 1 à 3, dans lequel la séquence de valeurs $((p_n))$ est générée au moyen de la relation de récurrence $p_{n+1} = q.p_n + r$, appliquée à des paramètres secrets q, r et $p_0$.

**5.** Procédé de protection d'un microcircuit (12) selon l'une des revendications 1 à 3, dans lequel la séquence de valeurs $((p_n))$ est générée au moyen de la relation de récurrence $p_{n+1} = (q.p_n + r) \mod m$, appliquée à des paramètres secrets q, r, m et $p_0$.

**6.** Procédé de protection d'un microcircuit (12) selon la revendication 5, dans lequel m est une puissance entière de 2.

**7.** Procédé de protection d'un microcircuit (12) selon l'une des revendications 1 à 3, dans lequel :

- la séquence de valeurs $((p_n))$ est à valeurs dans un groupe cyclique GC à m éléments avec une valeur p comme élément générateur du groupe et la multiplication comme loi de composition interne, et
- l'étape de génération de la séquence de valeurs comprend les étapes consistant à :

  - choisir un élément initial $p_0$ de la séquence comme étant l'élément générateur p auquel est appliquée k fois la loi de composition interne du groupe GC, et
  - passer d'un élément $p_i$ de rang i à un élément $p_{i+1}$ de rang i+1 en appliquant k' fois la loi de composition interne du groupe GC, m, p, k et k' étant des paramètres secrets (S).

**8.** Procédé de protection d'un microcircuit (12) selon l'une des revendications 1 à 3, dans lequel la séquence de valeurs $((p_n))$ est à valeurs dans un groupe de Frobenius, notamment le groupe des transformations affines inversibles sur un corps fini GF(q), où l'ordre q est un nombre premier de k bits, q et k étant des paramètres secrets (S).

**9.** Procédé de protection d'un microcircuit (12) selon l'une des revendications 1 à 3, dans lequel la séquence de valeurs $((p_n))$ est à valeurs issues d'un registre à décalage avec rétroaction linéaire de taille m tel que les éléments de la séquence vérifient une relation du type $p_{t+m} = \alpha_m.p_t + \alpha_{m-1}.p_{t+1} + ... + \alpha_1.p_{t+m-1}$, où les $\alpha_i$ prennent la valeur 0 ou 1, les paramètres $\alpha_i$, la taille m et les m premiers éléments de la séquence de valeurs $((p_n))$ étant des paramètres secrets (S).

**10.** Procédé de protection d'un microcircuit (12) selon l'une des revendications 1 à 3, dans lequel la séquence de valeurs $((p_n))$ est obtenue par la relation de récurrence $p_{n+1} = F(p_n)$, où F réalise un calcul de Contrôle de Redondance Cyclique sur la base d'un polynôme de Contrôle de Redondance Cyclique, le premier élément de la séquence de valeurs et le polynôme choisi étant des paramètres secrets (S).

**11.** Procédé de protection d'un microcircuit (12) selon l'une des revendications 1 à 10, comportant les étapes consistant à :

- générer une pluralité de séquences de valeurs à partir d'une pluralité de fonctions génératrices et d'une pluralité de paramètres secrets correspondants,
- combiner la pluralité de séquences de valeurs $((p'_n), (p''_n))$ à l'aide d'une relation prédéfinie pour générer une nouvelle séquence de valeurs $((p_n))$, et
- générer le paramètre de protection (P) de façon reproductible à partir d'au moins une valeur de la nouvelle séquence de valeur $((p_n))$.

**12.** Procédé de protection d'un microcircuit (12) selon l'une des revendications 1 à 11, comportant les étapes consistant à :

- combiner la séquence de valeurs ($(p'_n)$) avec des paramètres publics de l'algorithme de cryptographie pour générer une nouvelle séquence de valeurs ($(p_n)$), et
- générer le paramètre de protection (P) de façon reproductible à partir d'au moins une valeur de la nouvelle séquence de valeurs.

**13.** Dispositif à microcircuit (12) protégé contre des attaques visant à découvrir une donnée secrète (K, M) utilisée lors de l'exécution par le microcircuit d'un algorithme de cryptographie (10), comprenant au moins une mémoire sécurisée (16) pour le stockage de la donnée secrète, un générateur de données (20') pour la génération d'au moins un paramètre (P) de protection de la donnée secrète et un microprocesseur (18) pour l'exécution, modifiée à l'aide du paramètre de protection, de l'algorithme de cryptographie (10), **caractérisé en ce que** :

- le générateur de données (20') comporte

- une section génératrice (20'a) configurée pour générer la séquence de valeurs ($(p_n)$) par application successives d'au moins une fonction génératrice prédéfinie à au moins un paramètre secret prédéterminé (S), la séquence de valeurs étant déterminable uniquement à partir du paramètre secret et de la fonction génératrice, et
- une section (20'b) de fourniture du paramètre de protection (P) de façon reproductible à partir d'au moins une valeur d'une séquence de valeurs fournie par la section génératrice,

et **en ce que** le paramètre secret (S) est un paramètre prédéterminé stocké dans la mémoire sécurisée (16) du microcircuit.

**14.** Dispositif à microcircuit (12) selon la revendication 13, configuré pour :

- réaliser une étape d'initialisation (INIT) comprenant une étape consistant à définir le paramètre secret (S), et
- modifier chaque exécution de l'algorithme de cryptographie au moyen d'une pluralité de paramètres de protection ($P_1, ... P_N$) qui sont respectivement générés à partir des éléments $p_{N(i-1)+1}$ à $p_{Ni}$ de la séquence de valeurs ($(p_n)$) lors d'une i-ème exécution de l'algorithme de cryptographie suivant l'étape d'initialisation.

**15.** Dispositif portable, notamment carte à puce (30), comprenant un dispositif à microcircuit (12) selon l'une des revendications 13 ou 14.

**Patentansprüche**

**1.** Verfahren zum Schutz einer Mikroschaltung (12) gegen Angriffe, die darauf abzielen, geheime Daten (K, M) zu entdecken, die in einem sicheren Speicher (16) gespeichert und während der Ausführung eines Kryptoalgorithmus (10) durch die Mikroschaltung verwendet werden, umfassend einen Schritt zum Erzeugen mindestens eines Parameters (P) zum Schutz der geheimen Daten (K, M) und einen Schritt zum Modifizieren der Ausführung des Kryptoalgorithmus unter Verwendung dieses Schutzparameters (P), **dadurch gekennzeichnet, dass** es die folgenden Schritte umfasst:

- Bereitstellen mindestens eines vorbestimmten Geheimparameters (S), der im sicheren Speicher (16) der Mikroschaltung gespeichert ist,
- Definieren mindestens einer Generatorfunktion (20'a) zum Erzeugen einer Wertefolge ($(p_n)$) durch aufeinanderfolgende Anwendungen der Generatorfunktion auf den Geheimparameter (S), wobei die Wertefolge nur aus der Generatorfunktion und dem Geheimparameter (S) bestimmbar ist,
- Erzeugen mindestens einer Wertefolge ($(p_n)$) unter Verwendung der Generatorfunktion und des Geheimparameters, und
- Erzeugen des Schutzparameters (P), reproduzierbar aus mindestens einem Wert in der Wertefolge.

**2.** Verfahren zum Schutz einer Mikroschaltung (12) nach Anspruch 1, wobei die geheimen Daten (K, M) eine Nachricht (M), ein geheimer Schlüssel (K) für symmetrische Kryptographie, ein privater Schlüssel (K) für asymmetrische Kryptographie oder eine Kombination dieser Elemente sind.

**3.** Verfahren zum Schutz einer Mikroschaltung (12) nach Anspruch 1 oder 2, umfassend einen Initialisierungsschritt (INIT), umfassend den Schritt des Definierens des Geheimparameters (S), und wobei jede Ausführung des Kryptographiealgorithmus durch eine Vielzahl von Schutzparametern ($P_1$, ..., $P_N$) modifiziert wird, die jeweils aus den Elementen $p_{N(i-1)+1}$ bis $p_{Ni}$ der Wertefolge (($p_n$)) während einer i-ten Ausführung des Kryptographiealgorithmus nach dem Initialisierungsschritt erzeugt werden.

**4.** Verfahren zum Schutz einer Mikroschaltung (12) nach einem der Ansprüche 1 bis 3, wobei die Wertefolge (($p_n$)) durch die Wiederholungsbeziehung $p_{n+1} = q \cdot p_n + r$ erzeugt wird, die auf die Geheimparameter q, r und $p_0$ angewendet wird.

**5.** Verfahren zum Schutz einer Mikroschaltung (12) nach einem der Ansprüche 1 bis 3, wobei die Wertefolge (($p_n$)) durch die Wiederholungsbeziehung $p_{n+1} = (q \cdot p_n + r) \bmod m$ erzeugt wird, die auf die Geheimparameter q, r, m und $p_0$ angewendet wird.

**6.** Verfahren zum Schutz einer Mikroschaltung (12) nach Anspruch 5, wobei m eine ganzzahlige Potenz von 2 ist.

**7.** Verfahren zum Schutz einer Mikroschaltung (12) nach einem der Ansprüche 1 bis 3, wobei :

- die Wertefolge (($p_n$)) in einer zyklischen Gruppe GC mit m Elementen mit einem Wert p als erzeugendem Element der Gruppe und Multiplikation als internes Zusammensetzungsgesetz wertbasiert ist, und
- der Schritt zum Erzeugen der Wertefolge die folgenden Schritte umfasst:

  - ein anfängliches Element $p_0$ der Folge als das erzeugende Element p auswählen, auf das das interne Zusammensetzungsgesetz der GC-Gruppe k-mal angewendet wird, und
  - Durchlaufen von einem Element $p_i$ des Ranges i auf ein Element $p_{i+1}$ des Ranges i + 1 durch Anwenden des k'-fachen des internen Zusammensetzungsgesetzes der Gruppe GC, m, p, k, k und k', die Geheimparameter (S) sind.

**8.** Verfahren zum Schutz einer Mikroschaltung (12) nach einem der Ansprüche 1 bis 3, wobei die Wertefolge (($p_n$)) in einer Frobenius-Gruppe wertbasiert ist, insbesondere die Gruppe der invertierbaren affinen Transformationen über einem endlichen Feld GF(q), wobei die Ordnung q eine Primzahl von k Bits ist und q und k Geheimparameter (S) sind.

**9.** Verfahren zum Schutz einer Mikroschaltung (12) nach einem der Ansprüche 1 bis 3, wobei die Wertefolge (($p_n$)) auf Werten aus einem Schieberegister mit linearer Rückmeldung der Größe m basiert, so dass die Elemente der Folge eine Beziehung vom Typ $p_{t+m} = \alpha_m \cdot p_t + \alpha_{m-1} \cdot p_{t+1} + ... + \alpha_1 \cdot P_{t+m-1}$ überprüfen, wobei die $\alpha_i$ den Wert 0 oder 1 annehmen und die Parameter $\alpha_i$, die Größe m und die ersten m Elemente der Wertefolge (($p_n$)) Geheimparameter (S) sind.

**10.** Verfahren zum Schutz einer Mikroschaltung (12) nach einem der Ansprüche 1 bis 3, wobei die Wertefolge (($p_n$)) durch die Wiederholungsbeziehung $p_{n+1} = F(p_n)$ erhalten wird, wobei F eine Berechnung der zyklischen Redundanzsteuerung beruhend auf einem zyklischen Redundanzsteuerpolynom durchführt, wobei das erste Element der Wertefolge und das ausgewählte Polynom Geheimparameter (S) sind.

**11.** Verfahren zum Schutz einer Mikroschaltung (12) nach einem der Ansprüche 1 bis 10, umfassend die folgenden Schritte:

- Erzeugen mehrerer Wertefolgen aus mehreren Erzeugungsfunktionen und mehreren entsprechenden Geheimparametern,
- Kombinieren der mehreren Wertefolgen (($p'_n$), ($p''_n$)) unter Verwendung einer vordefinierten Beziehung, um eine neue Wertefolge (($p_n$)) zu erzeugen, und
- Erzeugen des Schutzparameters (P), reproduzierbar aus mindestens einem Wert der neuen Wertefolge (($p_n$)).

**12.** Verfahren zum Schutz einer Mikroschaltung (12) nach einem der Ansprüche 1 bis 11, umfassend die folgenden Schritte:

- Kombinieren der Wertefolge (($p_n$)) mit öffentlichen Parametern des Kryptographiealgorithmus, um eine neue Wertefolge (($p_n$)) zu erzeugen, und
- Erzeugen des Schutzparameters (P), reproduzierbar aus mindestens einem Wert der neuen Wertefolge.

**13.** Mikroschaltungsvorrichtung (12), die vor Angriffen geschützt ist, um geheime Daten (K, M) zu entdecken, die verwendet werden, wenn die Mikroschaltungsanordnung einen Kryptographiealgorithmus (10) ausführt, umfassend mindestens einen sicheren Speicher (16) zum Speichern der geheimen Daten, einen Datengenerator (20') zum Erzeugen mindestens eines geheimen Datenschutzparameters (P) und einen Mikroprozessor (18) zum Ausführen des Kryptographiealgorithmus (10), der unter Verwendung des Schutzparameters modifiziert wurde, **dadurch gekennzeichnet, dass**:

- der Datengenerator (20') Folgendes beinhaltet:

- einen Generatorabschnitt (20'a), der konfiguriert ist, um die Wertefolge (($p_n$)) durch aufeinanderfolgendes Anwenden mindestens einer vordefinierten Generatorfunktion auf mindestens einen vorbestimmten Geheimparameter (S) zu erzeugen, wobei die Wertefolge nur aus dem Geheimparameter und der Generatorfunktion bestimmbar ist, und
- einen Abschnitt (20'b) zum reproduzierbaren Bereitstellen des Schutzparameters (P) aus mindestens einem Wert einer vom Erzeugungsabschnitt bereitgestellten Wertefolge,

und dadurch, dass der Geheimparameter (S) ein vorbestimmter Parameter ist, der im sicheren Speicher (16) der Mikroschaltung gespeichert ist.

**14.** Mikroschaltungsvorrichtung (12) nach Anspruch 13, die konfiguriert ist für:

- Durchführen eines Initialisierungsschritts (INIT), der einen Schritt zum Definieren des Geheimparameters (S) beinhaltet, und
- Modifizieren jeder Ausführung des Kryptographiealgorithmus mittels mehrerer Schutzparameter ($P_1$, ... $P_N$), die jeweils aus den Elementen $p_{N(i-1) + 1}$ bis $p_{Ni}$ der Wertefolge (($p_n$)) während einer i-ten Ausführung des Kryptographiealgorithmus nach dem Initialisierungsschritt erzeugt werden.

**15.** Tragbare Vorrichtung, insbesondere eine Chipkarte (30), umfassend eine Mikroschaltungsvorrichtung (12) nach einem der Ansprüche 13 oder 14.

**Claims**

**1.** Method of protecting a microcircuit (12) against attacks aimed at discovering secret data (K, M) stored in a secure memory (16) and used on execution by the microcircuit of an encryption algorithm (10), comprising a step of generating at least one protection parameter (P) for the secret data (K, M) and a step of modifying the execution of the encryption algorithm by means of said protection parameter (P), **characterized in that** it comprises the steps of:

- providing at least one predetermined secret parameter (S) stored in the secure memory (16), of the microcircuit,
- defining at least one generating function (20'a) allowing for the generation of a sequence of values (($p_n$)) by successive applications of the generating function to the secret parameter (S), the sequence of values being determinable only from the generating function and the secret parameter (S),
- generating at least one sequence of values (($p_n$)) by means of the generating function and the secret parameter, and
- generating the protection parameter (P) in a reproducible way from at least one value of the sequence of values.

**2.** Method of protecting a microcircuit (12) according to claim 1, in which the secret data (K, M) is a message (M), a symmetric cryptography secret key (K), an asymmetric cryptography private key (K), or a combination of these elements.

**3.** Method of protecting a microcircuit (12) according to claim 1 or 2, comprising an initialization step (INIT) comprising the step of defining the secret parameter (S), and in which each execution of the encryption algorithm is modified by a plurality of protection parameters ($P_1$, ... $P_N$), that are generated respectively from elements $p_{N(i-1)+1}$ to $p_{Ni}$ in the sequence of values (($p_n$)) on an i-th execution of the encryption algorithm following the initialization step.

**4.** Method of protecting a microcircuit (12) according to one of the claims 1 to 3, in which the sequence of values (($p_n$)) is generated by means of the recurrence relation $p_{n+1} = q.p_n + r$, applied to secret parameters q, r, and $p_0$.

5. Method of protecting a microcircuit (12) according to one of the claims 1 to 3, in which the sequence of values $((p_n))$ is generated by means of the recurrence relation $p_{n+1} = (q.p_n + r) \mod m$, applied to secret parameters q, r, m, and $p_0$.

6. Method of protecting a microcircuit (12) according to claim 5, in which m is an integer power of 2.

7. Method of protecting a microcircuit (12) according to one of the claims 1 to 3, in which:

   - the sequence of values $((p_n))$ is with values in a cyclic group GC with m elements with a value p as element generator for the group and the multiplication as internal composition law and the step of generating the sequence of values comprises the steps of:
   - choosing an initial element $p_0$ of the sequence as being the generator element p to which the group GC internal composition law is applied k times, and
   - changing from an element $p_i$ of rank i to an element $p_{i+1}$ of rank i+1 by applying k' times the group GC internal composition law,

   m, p, k and k' being secret parameters (S).

8. Method of protecting a microcircuit (12) according to one of the claims 1 to 3, in which the sequence of values $((p_n))$ is with values in a Frobenius group, in particular the group of reversible affine transformations on a finished field GF(q), where the order q is a prime number of k bits, q and k being secret parameters (S).

9. Method of protecting a microcircuit (12) according to one of the claims 1 to 3, in which the sequence of values $((p_n))$ is with values output from a shift register with linear feedback of size m such that the elements in the sequence comply with a relation of the type $p_{t+m} = \alpha_m.p_t + \alpha_{m-1}.p_{t+1} + ... + \alpha_1.p_{t+m-1}$, where the $\alpha_i$ take the value 0 or 1, the parameters $\alpha_i$, the size m and the m first elements in the sequence of values $((p_n))$ being secret parameters (S).

10. Method of protecting a microcircuit (12) according to one of the claims 1 to 3, in which the sequence of values $((p_n))$ is obtained by the recurrence relation $p_{n+1} = F(p_n)$, where F carries out a Cyclic Redundancy Check calculation based on a Cyclic Redundancy Check polynomial, the first element in the sequence of values and the polynomial chosen being secret parameters (S).

11. Method of protecting a microcircuit (12) according to one of the claims 1 to 10, comprising the steps of:

   - generating a plurality of sequences of values from a plurality of generating functions and from a plurality of corresponding secret parameters,
   - combining the plurality of sequences of values $((p'_n), (p''_n))$ through a ore-defined relation to generate a new sequence of values $((p_n))$, and
   - generating the protection parameter (P) in a reproducible way from at least one value of the new sequence of values $((p_n))$.

12. Method of protecting a microcircuit (12) according to one of the claims 1 to 11, comprising the steps of:

   - combining the sequence of values $((p'_n))$ with the encryption algorithm public parameters to generate a new sequence of values $((p_n))$, and
   - generating the protection parameter (P) in a reproducible way from at least one value of the new sequence of values.

13. Microcircuit device (12) protected against attacks aimed at discovering secret data (K, M) used on execution by the microcircuit of an encryption algorithm (10), comprising at least a secure memory (16) for the storage of the secret data, a data generator (20') for the generation of at least one protection parameter (P) for the secret data and a microprocessor (18) for the execution, modified using the protection parameter and the encryption algorithm (10), **characterized in that**:

   - the data generator (20') comprises:

     - a generating section (20'a) configured to generate the sequence of values $((p_n))$ by successive application of at least one predefined generating function to at least one predetermined secret parameter (S), the sequence of values being determinable only from the secret parameter and from the generating function, and

- a section (20'b) for supplying the protection parameter (P) in a reproducible way from at least one value of a sequence of values supplied by the generating section,

and **in that** the secret parameter (S) is a predetermined parameter stored in the secure memory (16) of the microcircuit.

14. Microcircuit device (12) according to claim 13, configured to:

- perform an initialization (INIT) step comprising a step of defining the secret parameter (S), and
- modifying each execution of the encryption algorithm by means of a plurality of protection parameters ($P_1$, ... $P_N$) that are generated respectively from elements $p_{N(i-1)+1}$ to $p_{Ni}$ of the sequence of values (($p_n$)) on an i-th execution of the encryption algorithm following the initialization step.

15. Portable device, in particular a smart card (30), comprising a microcircuit device (12) according to one of the claims 13 to 14.

## Figure 1

## Figure 2

## Figure 3

## Figure 4

EP 2 215 768 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 6278783 B
- US 20040025032 A1

- FR 2867635

### Littérature non-brevet citée dans la description

- Differential Power Analysis. **P. KOCHER ; J. JAFFE ; B. JUN.** Advances in Cryptology - Crypto 99 Proceedings, Lecture Notes In Computer Science. Springer-Verlag, 1999, vol. 1666